# Europäisches Patentamt
# European Patent Office
# Office européen des brevets

(11) Veröffentlichungsnummer: **0 251 055
B1**

# EUROPÄISCHE PATENTSCHRIFT

(45) Veröffentlichungstag der Patentschrift:
12.09.90

(21) Anmeldenummer: 87108774.8

(22) Anmeldetag: 19.06.87

(51) Int. Cl.⁵: **B65G 49/02, C25D 17/06,
C25D 17/28**

(54) Haltevorrichtung für beidendig offene Dosenrümpfe aus ferromagnetischem Werkstoff zum Transport an Fördern.

(30) Priorität: 26.06.86 DE 3621383

(43) Veröffentlichungstag der Anmeldung:
07.01.88 Patentblatt 88/1

(45) Bekanntmachung des Hinweises auf die Patenterteilung:
12.09.90 Patentblatt 90/37

(84) Benannte Vertragsstaaten:
AT BE CH DE ES FR GB IT LI LU NL SE

(56) Entgegenhaltungen:
DE-A- 2 024 106
FR-A- 1 119 019
GB-A- 866 482
US-A- 2 640 584
US-A- 2 940 581
US-A- 3 647 675
US-A- 4 447 049

(73) Patentinhaber: Schmalbach-Lubeca AG,
Schmalbachstrasse 1, D-3300 Braunschweig(DE)

(72) Erfinder: Helbing, Hartmut, Dipl.-Ing., Wolfstrasse 5,
D-3253 Hessisch Oldendorf(DE)
Erfinder: Bolte, Georg, Dr. Dipl.-Chem., Klosterhof 15,
D-3303 Vecheide(DE)

(74) Vertreter: Döring, Rudolf, Dr.-Ing., Patentanwälte
Dr.-Ing. R. Döring Dipl.-Phys. Dr. J. Fricke Jasperallee 1a,
D-3300 Braunschweig(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Haltevorrichtung für beidendig offene Dosenrümpfe aus ferromagnetischem Werkstoff zum Transport an Förderern, mit denen did Dosenrümpfe durch Behandlungszonen, insbesondere ein Elektrotauchbad, hindurchgefördert werden können.

Beim Transport beidendig offener Dosenrümpfe mittels diese tragender Förderer, beispielsweise zur Zuführung zu Behandlungszonen oder zum Hindurchfördern durch die Behandlungszonen, werden die Dosenrümpfe in der Regel aufrecht stehend relativ dicht nebeneinander auf dem Förderer angeordnet und durch seitliche Leisten an den Förderern gegen ein Abrutschen gesichert. Bei Dosenrümpfen aus ferromagnetischem Werkstoff können die Förderer als sog. Magnetbandförderer ausgebildet sein, welche die Dosenrümpfe aufgrund magnetischer Kräfte in ihrer Position auf dem Förderer halten. Allerdings sind derartige Magnetbandförderer mehr für einendig offene Dosen aus ferromagnetischem Werkstoff geeignet, wenn diese mit ihrem Boden auf dem Förderer stehend transportiert werden, da nur in dieser Position Magnetkräfte auf den Dosenrumpf übertragen werden, die einen sicheren Stand der Dosenrümpfe gewährleisten. Bei beidendig offenen Dosenrümpfen und deren stehender Förderung auf dem Magnetband kommen nur relativ geringe Magnet- bzw. Haltekräfte zur Wirkung.

Wenn im Zuge des Förderers eine Richtungsänderung nach oben oder unten erfolgt, sind Förderer der eingangs beschriebenen Art ohne magnetische Haltekräfte völlig ungeeignet. Bei Verwendung von Magnetbandförderern werden die ohnehin auf beidendig offene Dosenrümpfe wirksamen Haltekräfte im Bereich der Richtungsänderung des Förderers noch stärker vermindert, da die Dosenrümpfe in diesen Bereichen nicht mehr vollständig auf dem Förderer aufstehen.

Die bekannten Förderer sind zur Erzielung und Aufrechterhaltung eines sicheren Standes der Dosenrümpfe auf dem Förderer für den Transport der Dosenrümpfe durch Tauchbäder völlig ungeeignet und für den Transport durch andere Behandlungszonen, in denen die Dosenrümpfe allseits der Einwirkung eines Behandlungsmediums ausgesetzt werden sollen, wie beispielsweise zur Trocknung, nur bei Inkaufnahme großer Nachteile verwendbar.

Aus den vorgenannten Gründen hat man für die Tauchbehandlung von beidendig offenen Dosenrümpfen besondere Halteeinrichtungen entwickelt (DE-OS 20 24 106), die oberhalb des Tauchbades angeordnet sind und aus zwei parallel zueinander verlaufenden ebenen, siebförmigen Trägern bestehen, zwischen denen die Dosenrümpfe aufgenommen und gemeinsam mit den Siebträgern in die Behandlungsflüssigkeit abgesenkt werden.

Der Erfindung liegt die Aufgabe zugrunde, eine Haltevorrichtung der eingangs beschriebenen Art so auszubilden, daß die beidendig offenen Dosenrümpfe von allen Seiten frei zugänglich auf dem Förderer nach unten oder auch nach oben weisend sicher gehalten, sowie entlang von Umlenkstellen des Förderers mitgenommen werden können und eine problemlose Bestückung sowie Entnahme der Dosenrümpfe von der Vorrichtung ermöglicht wird.

Zur Lösung vorstehender Aufgabe kennzeichnet sich die genannte Haltevorrichtung erfindungsgemäß durch die im Anspruch 1 wiedergegebenen Merkmale.

Es sind bereits Haltevorrichtungen bekannt (GB-A 866 482) zum Einhängen von Kleinteilen in galvanische Bäder, bei denen längs eines Tragstabes mit einem Aufhängehaken im Abstand angeordnete Stützfinger vorgesehen sind. Diese erstrecken sich quer zu dem Tragstab und sind an ihren freien Enden mit einander zugekehrten gegensinnigen, muldenförmigen Vertiefungen zum Halten der Kleinteile versehen. Dabei sind jeweils zwei in einer gemeinsamen Ebene, jedoch im Winkel zueinander verlaufende Stützfinger und ein diesen zugeordneter längs verschieblich gehaltener weiterer Stützfinger auf dem Tragstab angeordnet. Somit werden die Kleinteile durch ihren Eingriff in jeweils drei muldenförmige Ausnehmungen der Stützfinger gehalten.

Bei einer anderen Haltevorrichtung (US-A 4 442 049) sind an einem Förderer anhängbare Tragstäbe mit U-förmigen Stützgliedern vorgesehen, wobei die Stützglieder sich mit ihren freien Schenkelenden quer zum Tragstab erstrecken und ebenfalls an ihren freien Enden muldenförmige Vertiefungen aufweisen. Die mit den Tragstäben in einem Flüssigkeitsbad einzutauchenden Werkstücke können dabei entweder zwischen jeweils zwei im Abstand längs des Tragstabes angeordneten Stützgliedern klemmend gehalten werden, oder aber die Werkstücke können bei hohlzylindrischer Ausbildung jeweils auf ein U-förmiges Stützglied im Klemmsitz aufgeschoben werden.

Bei den vorgenannten Halteeinrichtungen ist das Einsetzen und Entnehmen der Werkstücke aufwendig, und es ergeben sich zwischen den Stützgliedern und den Werkstücken relativ große Anlageflächen.

Gegenüber diesen bekannten Vorrichtungen wird bei der Ausbildung nach der Erfindung der jeweilig an der Vorrichtung gehaltene Dosenrumpf unter der Einwirkung von Magnetkräften mit seinen gegenüberliegenden endseitigen Öffnungsrändern gegen die schmalen Kanten der freien Schenkel der U-förmig ausgebildeten Stützböckchen gedrückt, so daß ein Kontakt zwischen den Stützböckchen und den Dosenrümpfen nur an solchen Stellen der Öffnungsränder erfolgt, die bei der späteren Falzung der Dosenrümpfe innerhalb der Falznaht liegen. Wenn beispielsweise die Dosenrümpfe einer Tauchbehandlung ausgesetzt werden, um einen Korrosionsschutz auf der Innen- und Außenwandfläche aufzubringen, entstehen zwar an den Kontaktstellen der Dosenrümpfe mit den Stützböckchen kleine Fehlstellen in dem Korrosionsschutz, die sich jedoch gemäß obigen Darlegungen bei der fertigen Dose nicht mehr nachteilig auswirken können.

Durch die beschriebene Ausbildung der Stützböckchen ist es zudem möglich, Dosenrümpfe unterschiedlicher Durchmesser an der Halteinrichtung zu befestigen, ohne daß irgendwelche Änderungen der Vorrichtung erforderlich sind.

Bei einer Ausbildung des Tragstabes als Permanentmagnet, ist es zur Bestückung der Haltevorrichtung mit den Dosenrümpfen lediglich erforderlich, den einzelnen Dosenrumpf in eine fluchtende Position mit dem Tragstab zu bringen und ihn im Bereich zwischen den jeweils zusammenwirkenden Stützböckchen dem Tragstab anzunähern, bis durch die magnetischen Anziehungskräfte der Dosenrumpf mit zunehmender Geschwindigkeit bis zur Anlage an die Stützböckchen in Richtung auf den Tragstab bewegt wird.

Bei einer Ausrüstung der Stützböckchen mit Permanentmagneten ist es lediglich notwendig, den Tragstab mit den daran gehaltenen Stützböckchen außermittig in Richtung parallel zur Längsachse des jeweiligen Dosenrumpfes in diesen einzuschieben, bis die Stützböckchen in Höhe der endseitigen Öffnungsränder des Dosenrumpfes zu liegen kommen, um in dieser Position den Dosenrumpf und die Stützböckchen einander anzunähern, bis durch die magnetischen Anziehungskräfte der Dosenrumpf an den Stützböckchen gehalten wird.

Bei der Entnahme der Dosenrümpfe aus der Haltevorrichtung sind nur über kurze Wege die magnetischen Haltekräfte zu überwinden, bis die Dosenrümpfe freikommen und dann auf bekannten Förderern weitertransportiert werden können.

Um die Vorrichtung auch für Dosenrümpfe unterschiedlicher Länge verwenden zu können, ist es vorteilhaft, wenn wenigstens eines der Stützböckchen längs des Tragstabes auf diesem verschiebbar gehalten ist.

Die mit den endseitigen Öffnungsrändern der Dosenrümpfe zusammenwirkenden Kanten der Stützflächen der Stützböckchen können parallel zu dem Tragstab ggfs. auch in Richtung vom Tragstab weg abgestuft verlaufen.

Als besonders zweckmäßig hat es sich jedoch erwiesen, wenn die zur Anlage der öffnungsseitigen Ränder der Dosenrümpfe vorgesehenen Kanten der freien Schenkel der Stützböckchen so geneigt verlaufen, daß die Kanten zusammenwirkender Stützböckchen einander zugekehrt sind. Hierdurch erfolgt gleichzeitig eine gewisse Zentrierung der Dosenrümpfe zwischen den zusammenwirkenden Kanten zweier Stützböckchen. Die Neigung der Kanten kann dabei linear oder aber auch dem Verlauf einer Kurve folgend so vorgesehen sein, daß neben der Zentrierungsfunktion der Kanten auch die Gefahr des Abgleitens der Dosenrümpfe vermieden wird. Durch den geneigten Verlauf der Kanten wirken die magnetischen Haltekräfte einem Abgleiten der Dosenrümpfe entgegen.

Zweckmäßig ist es, wenn der Tragstab an einer rechtwinklig zu seiner Längsrichtung verlaufenden endseitigen Platte aus elektrischisolierendem Werkstoff zur Verbindung mit dem Förderer gehalten wird. Hierdurch kann die Haltevorrichtung als vorgefertigte Einheit hergestellt und auswechselbar mit einem entsprechenden Förderer, beispielsweise einem Ketten- oder Bandförderer, lösbar verbunden werden.

Die vorgenannte Ausbildung ist besonders für Haltevorrichtungen geeignet, mit deren Hilfe die Dosenrümpfe durch ein Elektrotauchbad hindurchgefördert werden sollen.

Insbesondere bei Anordnungen mit einem Tragstab, welcher mit Permanentmagneten ausgerüstet ist, ist es günstig, wenn die den Tragstab haltende Platte sich in gleicher Richtung vom Tragstab weg erstreckt wie die Stützböckchen, und wenn in der Platte eine parallel zum Tragstab längs zu sich selbst verschiebbare Stabelektrode so gehalten ist, daß sie in der einen Endstellung bei an den Stützböckchen gehaltenem Dosenrumpf in dessen Innenraum hineinragt. Dabei ist es zweckmäßig, wenn sich die Elektrode über eine Feder auf der Platte abstützt, so daß sie gegen die Wirkung der Feder in eine Position überführt werden kann, in der sie nicht mehr in den an den Stützböckchen gehaltenen Dosenrumpf hineinragt. Diese Bewegungsmöglichkeit der Elektrode ist deshalb zweckmäßig, weil sie anderenfalls zu Schwierigkeiten bei der Überführung der Dosenrümpfe in die Halteposition sowie beim Entnehmen der Dosen von der Haltevorrichtung führen würde.

Bei der Verwendung der genannten Haltevorrichtung mit der gesondert vorgesehenen Elektrode zur Förderung der Dosenrümpfe durch ein Elektrotauchbad ist es fernerhin zweckmäßig, wenn das der Platte zugekehrte Stützböckchen an der Platte befestigt ist und aus elektrischleitendem Werkstoff besteht sowie als Stromzuführungselement ausgebildet ist, über welches der jeweilige Dosenrumpf an ein entsprechendes Spannungspotential gelegt wird, um mit der in den Dosenrumpf hineinragenden Elektrode zusammenwirken zu können.

Die Ausrüstung des Tragstabes mit Permanentmagneten ist in der verschiedensten Weise möglich. Günstig ist es, wenn der Tragstab als stabförmiger Permanentmagnet ausgebildet ist.

Die Ausrüstung des Tragstabes mit Permanentmagneten kann auch in der Weise erfolgen, daß im Bereich zwischen den Stützböckchen der Tragstab als Hülse ausgeführt ist, in welcher der Permanentmagnet Aufnahme findet.

Bei dieser Ausbildung ist der Permanentmagnet geschützt untergebracht. Wenn der Tragstab selbst als stabförmiger Permanentmagnet ausgeführt wird, empfiehlt es sich, ihn mit einer Schutzumhüllung, beispielsweise einer Folienumhüllung oder dgl., zu versehen.

Eine verschiebbare Anordnung des der Platte fernen Böckchens auf dem Tragstab ist konstruktiv besonders günstig, weil der Tragstab in diesem Falle gleichzeitig auch das Halteelement für dieses Böckchen bildet, welches nicht mit einer elektrischen Spannungsquelle verbunden werden muß.

Bei Haltevorrichtungen, deren Stützböckchen jeweils mit Permanentmagneten ausgerüstet sind, ist es besonders zweckmäßig, wenn eine Ausgestaltung gemäß den Ansprüchen 9 und 10 erfolgt.

Die Zeichnung gibt Ausführungsbeispiele der Erfindung wieder.

Es zeigen:

Fig. 1 eine teils im Längsschnitt wiedergegebene Seitenansicht der Vorrichtung mit einem Tragstab, welcher mit Permanentmagneten ausgerüstet ist,

Fig. 2 die perspektivische Darstellung eines Stützböckchens der Anordnung nach Fig. 1,

Fig. 3 in rein schematischer Darstellung die Verwendung von Haltevorrichtungen gemäß Fig. 1 in Verbindung mit einem Elektrotauchbad,

Fig. 4 eine Darstellung gemäß Fig. 1 mit einem als Elektrode ausgebildeten Tragstab,

Fig. 5 einen Schnitt durch die Anordnung gemäß Fig. 4 entlang der Schnittlinie V-V.

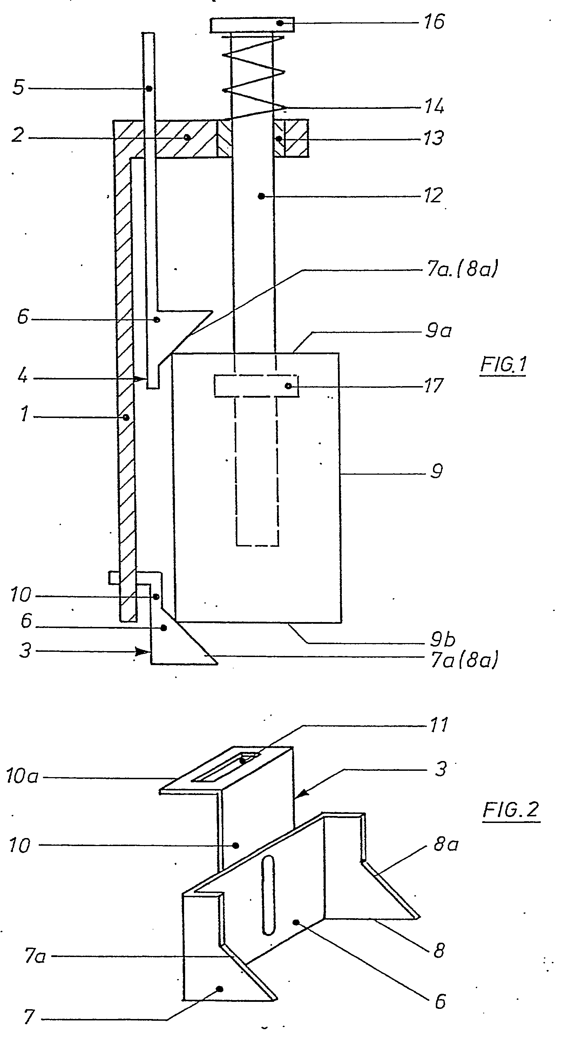

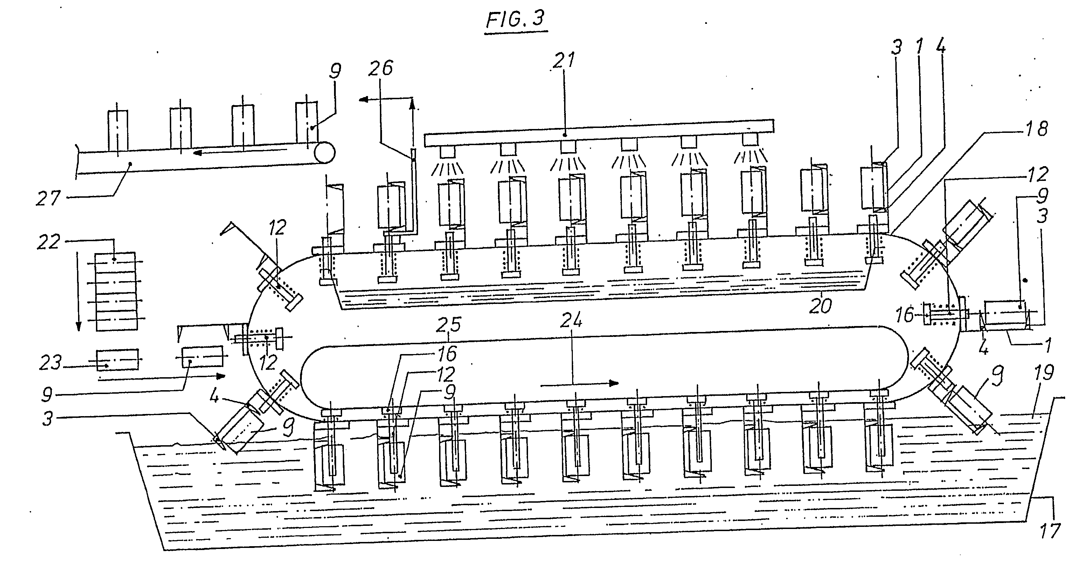

Die in den Figuren 1 bis 3 wiedergegebene Haltevorrichtung weist einen Tragstab 1 auf, welcher aus einem permanentmagnetischen Werkstoff besteht und eine ihn schützende Umhüllung aufweist. In dem Beispiel ist der Tragstab 1 mit einer Platte 2 aus elektrischisolierendem Werkstoff verbunden. Die Platte 2 dient zur Befestigung der in Fig. 1 wiedergegebenen Vorrichtung auf einem Förderer, wobei die anordnung auf dem Förderer so erfolgt, daß der Tragstab 1 von dem Förderer aufragt, wie dies schematisch aus Fig. 3 ersichtlich ist. Zur lösbaren Befestigung der Platte 2 auf dem Förderer sind entweder an der Platte oder an dem Förderer entsprechende Halteelemente vorgesehen, die in der Zeichnung jedoch nicht im einzelnen wiedergegeben sind. Hierzu können beispielsweise Klemmeinrichtungen an dem Förderer oder aber an der Tragplatte vorgesehen sein.

Die Vorrichtung gemäß den Fig. 1 bis 3 weist zwei im Abstand längs des Tragstabes 1 fluchtend gehaltene Stützböckchen 3 und 4 auf, von denen im Beispiel der Fig. 1 das Stützböckchen 3 auf dem Tragstab 1 längsverschiebbar gehalten ist, während das Stützböckchen 4 am Ende eines Stabes 5 angeordnet ist, welcher sich durch eine angepaßte Ausnehmung in der Platte 2 hindurch erstreckt. Zumindest das Stützböckchen 4 und der damit verbundene Stab 5 bestehen aus einem elektrischleitenden Werkstoff, so daß bei der Verwendung der Vorrichtung nach Fig. 1 in Verbindung mit einem Elektrotauchbad gemäß Fig. 3 das Stützböckchen 4 und der zugehörige Stab 5 als Stromzuführungselement ausgebildet sind und mit dem einen Pol einer Spannungsquelle verbunden werden können.

Die Stützböckchen 3 und 4 weisen übereinstimmend im Querschnitt U-förmig ausgebildete Stützelemente 6 auf, wie aus der Darstellung der Fig. 2 in Verbindung mit dem Stützböckchen 3 ersichtlich ist. Die beiderseits zu dem Tragstab 1 parallel zu dessen Längsrichtung verlaufenden freien Schenkel 7 und 8 bilden an ihren von dem Tragstab 1 wegweisenden Kanten 7a und 8a Stützflächen für die Anlage der gegenüberliegenden endseitigen Öffnungsränder 9a und 9b eines Dosenrumpfes 9, wie dies in Fig. 1 angedeutet ist.

Die als Stützflächen dienenden Kanten 7a und 8a der freien Schenkel 7 und 8 der Stützböckchen 3 und 4 verlaufen über einen Teil ihrer Länge gegenüber der Längsrichtung des Stabes 1 geneigt. Dabei ist die Anordnung so getroffen, daß die geneigt verlaufenden Kanten der Stützböckchen 3 und 4 einander zugekehrt sind, wie dies aus Fig. 1 deutlich hervorgeht.

Das Stützböckchen 3 ist gemäß Fig. 2 mit einem winkelförmigen Tragteil 10 ausgerüstet, in dessen Schen kel 10a eine Durchtrittsöffnung 11 angeordnet ist, welche dem Querschnitt des Tragstabes 1 angepaßt ist, so daß das Stützböckchen 3 auf den Tragstab 1 aufgeschoben und in Längsrichtung verschiebbar, jedoch klemmend gehalten werden kann.

Gemäß den Fig. 1 und 3 ist in der Platte 2 eine längs zu sich selbst verschiebbare Elektrode 12 gehalten, welche sich durch eine entsprechende Ausnehmung 13 durch die Tragplatte 2 hindurch erstreckt und mit einer sich auf der Tragplatte 2 abstützenden Feder 14 zusammenwirkt. An ihrem einen Ende ist die Elektrode 12 mit einer gleichzeitig als Widerlager für die Feder 14 ausgebildeten Kontaktplatte 16 versehen, mit der sich die Elektrode bei Verwendung der Vorrichtung nach Fig. 1 in Verbindung mit einem Elektrotauchbad gemäß Fig. 3 auf einer Stromzuführungseinrichtung abstützt.

In der Fig. 1 ist die Elektrode 12 in einer Position wiedergegeben, in der sie sich bis in das Innere des beidendig offenen Dosenrumpfes 9 hinein erstreckt. Es entspricht dies der Position, welche die Elektrode 12 einnimmt, wenn mittels der dargestellten Vorrichtung die beidendig offenen Dosenrümpfe 9 durch ein Tauchbad hindurchgeführt werden, wie aus Fig. 3 ersichtlich ist. Die andere Endstellung der Elektrode wird bestimmt durch einen Anschlag 17, welcher mit der Platte 2 zusammenwirkt, wenn die Elektrode 12 freigegeben wird.

Die Arbeitsweise der Vorrichtung nach Fig. 1 ergibt sich aus der schematischen Darstellung der Fig. 3.

In der Fig. 3 ist schematisch ein Elektrotauchbecken 17 dargestellt, welches mit einer elektrolytischen Lackfestkörper enthaltenden Flüssigkeit gefüllt ist, durch welches die Dosenrümpfe 9 zum Zwecke der Rundumlackierung hindurchgefördert werden sollen. Zu diesem Zweck sind eine Reihe von Vorrichtungen gemäß Fig. 1 an einem umlaufenden Förderer 18 angeordnet, dessen unteres Trum dicht oberhalb des Niveaus 19 der Elektrolytflüssigkeit verläuft.

Unterhalb des oberen Trums des Förderers 18 ist in dem dargestellten Beispiel eine Auffangwanne 20 vorgesehen, in welcher die aus einer Sprüheinrichtung 21 auf die zuvor in dem Elektrotauchbad behandelten Dosenrümpfe 9 aufgesprühte Flüssigkeit aufgefangen wird.

Über eine nur schematisch dargestellte Zuführeinrichtung 22 werden die zu behandelnden Dosenrümpfe 9 beispielsweise mittels einer die Dosenrümpfe magnetisch haltenden Vorschubeinrichtung 23 in die Bewegungsbahn der an dem Förderer 18 gehaltenen Vorrichtungen gemäß Fig. 1 überführt und in eine solche Position gebracht, daß sie zwischen die Stützböckchen 3 und 4 der jeweiligen Haltevorrichtung gelangen, wie dies im linken Teil der Fig. 3 angedeutet ist. Mit Annäherung der Haltevorrichtung an den in seiner Bewegungsbahn befindlichen Dosenrumpf wird dieser von dem Tragstab 1 aufgrund der von diesem ausgeübten Magnetkräfte in die in Fig. 1 wiedergegebene Position überführt und in dieser Position gehalten. Bei der Übernahme der Dosenrümpfe 9 durch die Haltevorrichtungen befindet sich die Elektrode 12 in ihrer Stellung außerhalb des Dosenrumpfes.

Die von den Halteeinrichtungen erfaßten Dosenrümpfe 9 werden im Zuge der Bewegung des Förderers 18 in Richtung des Pfeiles 24 in das Bad eingetaucht. Dabei gelangen die Elektroden 12 mit ihren Kontaktplatten 16 in Berührung mit einem Stromzuführungsband 25, welches als Endlosband ausgebildet ist und drücken die Elektroden 12 gegen die Wirkung der Federn 14 in die in Fig. 1 wiedergegebene Position, in welcher sie in die Dosenrümpfe 9 hineinragen. Das Stromzuführungsband 25 ist mit dem einen Pol einer Spannungsquelle verbunden, während der andere Pol der Spannungsquelle zumindest im Eintauchbereich der Dosenrümpfe 9 in das Tauchbad mit den Stäben 5 der Stützböckchen 4 elektrischleitend verbunden ist.

Beim Herausbewegen der Dosenrümpfe 9 aus dem Tauchbad gelangen die Elektroden 12 aus dem Wirkbereich des Kontaktbandes 25 und werden durch die Feder 14 in ihre die Dosenrümpfe 9 freigebende Endstellung überführt. Die Dosenrümpfe 9 gelangen unter die Einwirkung der Sprüheinrichtung 21 und werden nach Passieren dieser Einrichtung mittels einer nur schematisch wiedergegebenen Entnahmeeinrichtung 26 auf einen Weiterförderer 27 überführt.

Durch die beschriebene Ausbildung der Haltevorrichtung bleiben lediglich die Kontaktstellen der Öffnungsränder 9a und 9b der Dosenrümpfe 9 unlackiert, welche mit den Stützböckchen 3 und 4 zusammenwirken. Diese Kontaktstellen befinden sich somit in jenen Bereichen der Dosenrümpfe, die später bei Fertigstellung der Dose ohnehin korrosionsgeschützt innerhalb der Falzverbindungen mit dem Boden bzw. Deckel der Dosenrümpfe untergebracht werden.

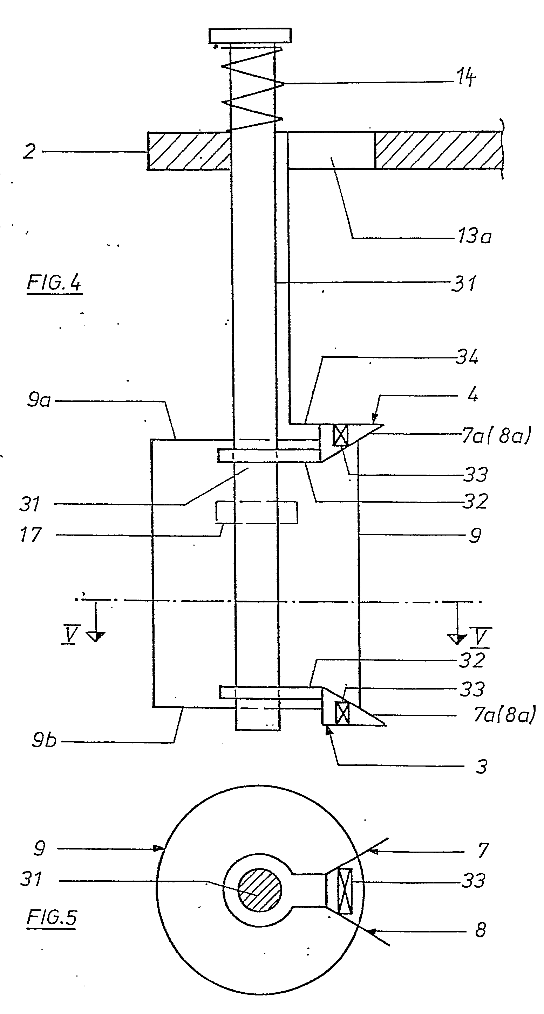

Die in den Fig. 4 und 5 wiedergegebene Haltevorrichtung gibt eine Alternative zu der Haltevorrichtung gemäß den Fig. 1 und 2 wieder. In den Fig. 4 und 5 sind die mit den Fig. 1 und 2 übereinstimmenden Teile auch mit gleichen Bezugszeichen versehen.

Die Haltevorrichtung nach den Fig. 4 und 5 weist ebenfalls einen Tragstab 31 auf, welcher jedoch in diesem Beispiel gleichzeitig als Elektrode ausgebildet ist. Der als Elektrode ausgebildete Tragstab 31 ist ähnlich wie die Elektrode 12 in der Platte 2 gehalten und stützt sich auf einer Feder 14 ab. Der Tragstab 31 kann ähnlich wie die Elektrode 12 längs zu sich selbst so weit verschoben werden, bis der Anschlag 17 an der Tragplatte zur Anlage kommt. Dabei kann der Anschlag 17 auch weiter zum freien Ende des Tragstabes 31 hin vorgesehen sein, um den Tragstab 31 vollständig aus der Bewegungsbahn des Dosenrumpfes 9 herauszubewegen, wenn dieser in Richtung senkrecht zur Längserstreckung des Tragstabes 31 gefördert werden sollte.

An dem als Elektrode ausgebildeten Tragstab 31 sind über Isolierstege 32 die Halteböckchen 3 und 4 in ähnlicher Ausgestaltung wie in der Ausführung nach den Fig. 1 und 2 gehalten. Zwischen den freien Schenkeln 7 und 8 der Stützböckchen 3 und 4 sind jeweils Permanentmagnete 33 angeordnet, welche entsprechende Haltekräfte auf den Dosenrumpf 9 ausüben, wenn dieser in die Nähe der Permanentmagnete gelangt.

Das obere Stützböckchen 4 dient gleichzeitig als Stromzuführungselement. Zu diesem Zweck ist das Stützböckchen 4 über eine Stromzuführungsleitung 34 mit dem einen Pol einer Spannungsquelle verbindbar, ebenso wie die Elektrode 31 mit dem anderen Pol der Spannungsquelle verbunden werden kann, ähnlich wie dies im Zusammenhang mit der Fig. 3 für die Elektrode 12 der Anordnung nach den Fig. 1 und 2 beschrieben ist. Für die Verbindung der Elektrode 31 und des Stützböckchens 4 mit den beiden Polen der Spannungsquelle können mit der Spannungsquelle verbundene Gleitschienen längs der Förderers angeordnet sein, an dem die Platten 2 zu befestigen sind. Das Stützböckchen 3 ist längs des Tragstabes 31 verschiebbar klemmend gehalten.

Um den Tragstab 31 der Anordnung nach den Fig. 4 und 5 mit den Stützböckchen in den Dosenrumpf 9 einführen zu können, ist es lediglich notwendig, den Tragstab außermittig parallel zur Längsachse des Dosenrumpfes in den Dosenrumpf zu verschieben und dann den Dosenrumpf und die Stützböckchen einander anzunähern, bis die Permanentmagneten 33 wirksam werden. Zur Entnahme der Dosenrümpfe 9 ist umgekehrt der Tragstab mit den Stützböckchen in Richtung quer zur Längsachse des Dosenrumpfes 9 zu verschieben, so daß die Stützböckchen mit dem Dosenrumpf außer Eingriff kommen, um dann den Tragstab 31 in Richtung zu der Platte 2 aus dem Dosenrumpf herauszubewegen. Zu diesem Zweck ist in der Tragplatte 2 eine schlitzförmige Ausnehmung 13a vorgesehen, durch die hindurch das Stützböckchen 4 sowie ggf. auch das Stützböckchen 3 behinderungsfrei hindurchbewegt werden kann.

Die Haltevorrichtungen in der beschriebenen Ausführung sind ersichtlich sowohl für Dosenrümpfe unterschiedlicher Durchmesser als auch unterschiedlicher Höhe verwendbar und können auch für die Förderung der Dosenrümpfe durch andere Behandlungszonen als Tauchbäder hindurchgefördert werden, wenn es darauf ankommt, eine Rundumbehandlung der Dosenrümpfe zu erzielen.

**Patentansprüche**

1. Haltevorrichtung für beidendig offene Dosenrümpfe aus ferromagnetischem Werkstoff zum Transport an Förderern, mit denen die Dosenrümpfe durch Behandlungszonen, insbesondere ein Elektrotauchband, hindurchgefördert werden können, dadurch gekennzeichnet, daß ein mit dem Förderer (18) verbindbarer vom Förderer aufragender Tragstab (1) vorgesehen ist mit zwei etwa im Abstand der Höhe des Dosenrumpfes (9) längs des Tragstabes (1) fluchtend gehaltenen Stützböckchen (3, 4), welche quer zur Längsrichtung des Tragstabes einen U-förmigen Querschnitt mit parallel zur Längsrichtung des Tragstabes (1) verlaufenden freien Schenkel (7, 8) aufweisen, daß der Tragstab (1) oder die freien Schenkel (7, 8) der Stützböckchen (3, 4) mit Permanentmagneten (33) ausgerüstet sind und die von dem Tragstab (1) wegweisenden Kanten (7a bzw. 8a) der Stützböckchen (3, 4) Stützflächen für die Anlage der gegenüberliegenden endseitigen Öffnungsränder (9a, 9b) eines Dosenrumpfes (9) bilden, um diesen mittels der magnetischen Kräfte in der Anlageposition zu halten.

2. Haltevorrichtung nach Anspruch 1, dadurch gekennzeichnet, daß wenigstens eines der Stützböckchen (3) längs des Tragstabes (1) auf diesem verschiebbar gehalten ist.

3. Haltevorrichtung nach Anspruch 1 oder 2, dadurch gekennzeichnet, daß die zur Anlage der endseitigen Öffnungsränder (9a, 9b) des Dosenrumpfes (9) vorgesehenen Kanten (7a, 8a) der freien Schenkel (7, 8) der Stützböckchen (3, 4) so geneigt verlaufen, daß die Kanten zusammenwirkender Stützböckchen einander zugekehrt sind.

4. Haltevorrichtung nach einem der vorhergehenden Ansprüche, dadurch gekennzeichnet, daß der Tragstab (1) an einer rechtwinklig zu seiner Längsrichtung verlaufenden endseitigen Platte (2) aus elektrisch isolierendem Werkstoff zur Verbindung mit dem Förderer (18) gehalten ist.

5. Haltevorrichtung nach einem der Ansprüche 1 bis 4, dadurch gekennzeichnet, daß die den Tragstab (1) haltende Platte (2) sich in gleicher Richtung vom Tragstab weg erstreckt wie die Stützböckchen (3, 4), und daß in der Platte (2) eine parallel zum Tragstab (1) längs zu sich selbst verschiebbare Stabelektrode (12) so gehalten ist, daß sie in der einen Endstellung bei an den Stützböckchen gehaltenem Dosenrumpf (9) in dessen Innenraum hineinragt.

6. Haltevorrichtung nach Anspruch 5, dadurch gekennzeichnet, daß sich die Elektrode (12) über eine Feder (14) auf der Platte (2) abstützt.

7. Haltevorrichtung nach einem der Ansprüche 4 bis 6, dadurch gekennzeichnet, daß das der Platte (2) zugekehrte Stützböckchen (4) an der Platte (2) befestigt ist und aus elektrisch leitendem Werkstoff besteht sowie als Stromzuführungselement ausgebildet ist.

8. Haltevorrichtung nach einem der Ansprüche 1 bis 7, dadurch gekennzeichnet, daß der Tragstab (1) als stabförmiger Permanentmagnet ausgebildet ist.

9. Haltevorrichtung nach den Ansprüchen 1 bis 3, dadurch gekennzeichnet, daß bei einer Anordnung der Permanentmagneten (33) in den freien Schenkeln (7, 8) der Stützböckchen (3, 4) und geneigt verlaufenden Kanten (7a bzw. 8a) der freien Schenkel (7, 8) der Stützböckchen (3, 4) der Tragstab (1) mit den Stützböckchen (3, 4) längs zu sich selbst verschiebbar gehalten und mit den Stützböckchen (3, 4) in Richtung der Längsachse des Dosenrumpfes (9) in diesen einschiebbar ist.

10. Haltevorrichtung nach Anspruch 9, dadurch gekennzeichnet, daß der Tragstab (31) als Elektrode ausgebildet ist und sich über eine Feder (14) auf der Platte (2) abstützt, daß die Stützböckchen (3, 4) über Isolierstege (32) mit dem Tragstab (31) verbunden sind, und daß das beim Eingriff des Tragstabes (31) in den Dosenrumpf (9) der Platte (2) zugekehrte Stützböckchen (4) als Stromzuführungselement ausgebildet ist.

## Revendications

1. Dispositif porteur pour corps de boîtes en un matériau ferromagnétique, ouverts aux deux extrémités, en vue du transport sur des convoyeurs par lesquels les corps de boîtes peuvent être acheminés à travers des zones de traitement, notamment un bain d'immersion électrophorétique, caractérisé par la présence d'une tige de support (1) pouvant être reliée au convoyeur (18), à partir duquel elle se dresse, et munie de deux sabots d'appui (3, 4) qui sont retenus avec alignement le long de la tige de support (1), d'un espacement correspondant sensiblement à la hauteur du corps de boîte (9), et présentent, transversalement par rapport à la direction longitudinale de la tige de support, une section configurée en U avec des branches libres (7, 8) s'étendant parallèlement à la direction longitudinale de la tige de support (1); et par le fait que la tige de support (1) ou les branches libres (7, 8) des sabots d'appui (3, 4) sont équipées d'aimants permanents (33), et les arêtes (7a, respectivement 8a) des sabots d'appui (3, 4), qui sont tournées à l'opposé de la tige de support (1), forment des surfaces d'appui pour le contact à plat des bords extrêmes opposés (9a, 9b) des ouvertures d'un corps de boîte (9), afin de maintenir celui-ci dans la position de contact à plat sous l'action des forces magnétiques.

2. Dispositif porteur selon la revendication 1, caractérisé par le fait qu'au moins l'un (3) des sabots d'appui est retenu le long de la tige de support (1), avec faculté de coulissement sur cette dernière.

3. Dispositif porteur selon la revendication 1 ou 2, caractérisé par le fait que les arêtes (7a, 8a) des branches libres (7, 8) des sabots d'appui (3, 4), prévues pour le contact à plat des bords extrêmes (9a, 9b) des ouvertures du corps de boîte (9), s'étendent avec une inclinaison telle que les arêtes de sabots d'appui associés soient tournées les unes vers les autres.

4. Dispositif porteur selon l'une des revendications précédentes, caractérisé par le fait que la tige de support (1) est retenue sur une plaque d'extrémité (2) en un matériau électriquement isolant, s'étendant à angle droit par rapport à sa direction longitudinale, en vue de la solidarisation avec le convoyeur (18).

5. Dispositif porteur selon l'une des revendications 1 à 4, caractérisé par le fait que la plaque (2) retenant la tige de support (1) s'étend, à l'écart de ladite tige de support, dans la même direction que les sabots d'appui (3, 4); et par le fait qu'une électrode longiligne (12), pouvant coulisser longitudinalement sur elle-même parallèlement à la tige de support (1) est retenue, dans la plaque (2), de telle sorte qu'elle s'engage dans l'espace interne du corps de boîte (9), dans l'une des positions extrêmes, lorsque ledit corps est retenu sur les sabots d'appui.

6. Dispositif porteur selon la revendication 5, caractérisé par le fait que l'électrode (12) prend appui sur la plaque (2) par l'entremise d'un ressort (14).

7. Dispositif porteur selon l'une des revendications 4 à 6, caractérisé par le fait que le sabot d'appui (4) tourné vers la plaque (2) est fixé à ladite plaque (2), et consiste en un matériau électriquement conducteur en étant également réalisé sous la forme d'un élément adducteur de courant.

8. Dispositif porteur selon l'une des revendications 1 à 7, caractérisé par le fait que la tige de support (1) est réalisée en tant qu'aimant permanent en forme de barreau.

9. Dispositif porteur selon les revendications 1 à 3, caractérisé par le fait que, lorsque les aimants permanents (33) sont disposés dans les branches libres (7, 8) des sabots d'appui (3, 4), et que les arêtes (7a, respectivement 8a) des branches libres (7, 8) des sabots d'appui (3, 4) s'étendent avec inclinaison, la tige de support (1) est retenue avec les sabots d'appui (3, 4) en pouvant coulisser longitudinalement sur elle-même, et peut pénétrer par coulissement dans le corps de boîte (9), avec les sabots d'appui (3, 4), dans la direction de l'axe longitudinal dudit corps.

10. Dispositif porteur selon la revendication 9, caractérisé par le fait que la tige de support (31) est réalisée sous la forme d'une électrode, et prend appui sur la plaque (2) par l'intermédiaire d'un ressort (14); par le fait que les sabots d'appui (3, 4) sont reliés à la tige de support (31) par l'entremise de membrures isolantes (32); et par le fait que le sabot d'appui (4), tourné vers la plaque (2) lors de la pénétration de la tige de support (31) dans le corps de boîte (9), est réalisé sous la forme d'un élément adducteur de courant.

## Claims

1. A holding device for can bodies of ferromagnetic material which are open at both ends, for conveying on conveyors whereby the can bodies can be conveyed through treatment zones particularly an electro-dipcoating bath, characterised in that a supporting bar (1) is provided, which can be connected to the conveyor (18) and projects outwards from the conveyor, with two small supports (3, 4) which are held in alignment along the supporting bar (1) with spacing corresponding substantially to the height of the can body (9), and which have, transversely to the longitudinal direction of the supporting bar, a U-shaped cross-section with free arms (7, 8) extending parallel to the longitudinal direction of the supporting bar (1), that the supporting bar (1) or the free arms (7, 8) of the small supports (3, 4) are equipped with permanent magnets (33), and the edges (7a and 8a respectively) of the small supports (3, 4), facing away from the supporting bar (1), form supporting surfaces for the abutment of the edges (9a, 9b) of the openings at opposite ends of a can body (9) in order to hold these in the abutting position by means of the magnetic forces.

2. A holding device according to Claim 1, characterised in that at least one of the small supports (3) is held on the supporting bar (1) for displacement along this.

3. A holding device according to Claim 1 or 2, characterised in that the edges (7a, 8a) of the free arms (7, 8) of the small supports (3, 4), which edges are provided for the abutment of the edges (9a, 9b) of the openings at the ends of the can body, extend so inclined that the edges of cooperating supports face one another.

4. A holding device according to any one of the preceding Claims, characterised in that the supporting bar (1) is held on an end plate (2) of electrically insulating material, extending at right angles to its longitudinal direction, for connection to the conveyor (18).

5. A holding device according to any one of Claims 1 to 4, characterised in that the plate (2) holding the supporting bar (1) extends away from the supporting bar in the same direction as the small supports (3, 4), and that held in the plate (2) is a stick electrode (12) which is displaceable lengthwise parallel to the supporting bar (1) in such a manner that in the one end position, when a can body (9) is held on the small supports, the electrode projects into the interior of the can body.

6. A holding device according to Claim 5, characterised in that the electrode (12) is supported on the plate (2) by a spring (14).

7. A holding device according to any one of Claims 4 to 6, characterised in that the small support (4) adjacent to the plate (2) is secured to the plate (2) and consists of electrically conducting material as well as being constructed in the form of a power supply element.

8. A holding device according to any one of Claims 1 to 7, characterised in that the supporting bar (1) is constructed in the form of a bar-shaped permanent magnet.

9. A holding device according to any one of Claims 1 to 3, characterised in that with an arrangement of the permanent magnets (33) in the free arms (7, 8) of the small supports (3, 4), and inclined edges (7a and 8a respectively) of the free arms (7, 8) of the small supports (3, 4), the supporting bar (1) together with the small supports (3, 4) is held for longitudinal displacement and can be pushed, together with the small supports (3, 4) into the can body (9) in the direction of the longitudinal axis thereof.

10. A holding device according to Claim 9, characterised in that the supporting bar (31) is constructed in the form of an electrode and is supported on the plate (2) by a spring (14), that the small supports (3, 4) are connected to the supporting bar (31) by insulating webs (32), and that the small support (4) which is adjacent to the plate (2) on engagement of the supporting bar (31) in the can body (9) is constructed in the form of a power supply element.

EP 0 251 055 B1

FIG.1

FIG.2

FIG. 3

FIG.4

FIG.5